# EUROPÄISCHE PATENTSCHRIFT

(11) **EP 2 399 265 B1**
(45) Veröffentlichungstag und Bekanntmachung des Hinweises auf die Patenterteilung: **26.12.2012**
(21) Anmeldenummer: 10706587.2
(22) Anmeldetag: 22.02.2010
(51) Int. Cl.: H01T 4/12, H01C 7/112, H01T 1/16, H01C 7/10, H01G 4/30

(54) **ELEKTRISCHES VIELSCHICHTBAUELEMENT**
ELECTRICAL MULTI-LAYER COMPONENT
COMPOSANT ÉLECTRIQUE À COUCHES MULTIPLES

(30) Priorität: 23.02.2009 DE 102009010212
(43) Veröffentlichungstag der Anmeldung: 28.12.2011
(73) Patentinhaber: Epcos AG, 81669 München (DE)
(72) Erfinder: FEICHTINGER, Thomas, A-8010 Graz (AT); KRENN, Georg, A-8020 Graz (AT)
(74) Vertreter: Epping - Hermann - Fischer
(86) Internationale Anmeldenummer: PCT/EP2010/052203
(87) Internationale Veröffentlichungsnummer: WO 2010/094795

(56) Entgegenhaltungen:
- JP-A- 2000 188 169
- US-A- 4 908 730
- US-A1- 2007 273 469

## Beschreibung

Aus der Druckschrift DE 102004058410 A1 ist ein elektrisches Vielschichtbauelement mit Schutzelement bekannt.

In US 2007/0273469 A1 ist ein Vielschicht-ZnO-Varistor beschrieben, dessen keramischer Grundkörper Zinkoxid in einer Kornstruktur mit Barium und drei verschiedenen weiteren Elementen als Zusätzen aufweist.

Eine zu lösende Aufgabe ist es, ein elektrisches Vielschichtbauelement anzugeben, das ein ESD-Schutzelement mit einer niedrigen Durchbruchspannung und einer niedrigen ESD-Klemmspannung umfasst.

Die Aufgabe wird durch ein elektrisches Vielschichtbauelement nach Anspruch 1 gelöst. Vorteilhafte Ausgestaltungen des elektrischen Vielschichtbauelements sind Gegenstand von Unteransprüchen.

Es wird ein elektrisches Vielschichtbauelement angegeben, das einen Grundkörper mit wenigstens zwei Außenelektroden aufweist. Die Außenelektroden sind vorzugsweise wenigstens an den Seitenflächen des elektrischen Vielschichtbauelements angeordnet.

Das elektrische Vielschichtbauelement weist wenigstens eine erste und wenigstens eine zweite Innenelektrode auf, die bei Ausführungsbeispielen elektrisch leitend mit je einer Außenelektrode verbunden sein können.

Das elektrische Vielschichtbauelement weist wenigstens eine keramische Varistorschicht auf, die wenigstens die erste Innenelektrode umfasst. Die erste und zweite Innenelektrode können direkt oder über Durchkontaktierungen im Grundkörper mit den Außenelektroden verbunden sein.

Das elektrische Vielschichtbauelement weist wenigstens eine dielektrische Schicht auf, die zwischen der wenigstens einen Varistorschicht und der zweiten Innenelektrode angeordnet ist und an die Varistorschicht angrenzt.

Die dielektrische Schicht des elektrischen Vielschichtbauelements weist wenigstens eine Öffnung auf. Die Öffnung kann als Durchbruch, als Aussparung beziehungsweise als eine Kavität oder ein Hohlraum ausgebildet sein.

Die Öffnung der dielektrischen Schicht ist vorzugsweise mit einem gasförmigen Medium gefüllt und grenzt bei Ausführungsbeispielen an die Varistorschicht an.

In einer Ausführungsform ist das gasförmige Medium, mit dem die Öffnung in der dielektrischen Schicht gefüllt ist, Luft. In einer weiteren Ausführungsform kann die Öffnung der dielektrischen Schicht auch mit einem anderen Gas oder einem Gasgemisch gefüllt sein. Insbesondere ist die Öffnung mit einem Edelgas gefüllt.

In einer Ausführungsform des elektrischen Vielschichtbauelements umfasst die dielektrische Schicht ein poröses Material. Das poröse Material umfasst Öffnungen beziehungsweise Vertiefungen oder teilweise beziehungsweise vollständig abgeschlossene Hohlräume, die mit dem gasförmigen Medium gefüllt sind.

In einer Ausführungsform ist zwischen der dielektrischen Schicht und der zweiten Innenelektrode wenigstens eine weitere Schicht angeordnet. Die weitere Schicht ist vorzugsweise derart ausgebildet, dass sie die zweite Innenelektrode umfasst.

In einer Ausführungsform des elektrischen Vielschichtbauelements reichen die Außenelektroden wenigstens teilweise bis auf die Ober- und/oder Unterseite des Grundkörpers.

In einer Ausführungsform des elektrischen Vielschichtbauelements ist vorgesehen, dass die zweite Innenelektrode durch Teilbereiche einer der Außenelektroden des elektrischen Vielschichtbauelements gebildet ist. Vorzugsweise übernimmt der Teilbereich der Außenelektrode, der einen direkten Kontakt zum Körper des elektrischen Vielschichtbauelements aufweist, die Funktion einer zweiten Innenelektrode.

In einer Ausführungsform des elektrischen Vielschichtbauelements ist eine dritte Innenelektrode im Körper angeordnet. Die dritte Innenelektrode ist in einer Ausführungsform als schwebende Innenelektrode ausgeführt. Die dritte Innenelektrode ist vorzugsweise von den Außenelektroden des elektrischen Vielschichtbauelements beabstandet und weist keinen elektrischen Kontakt zu einer oder mehreren Außenelektroden des elektrischen Vielschichtbauelements auf.

In einer Ausführungsform des elektrischen Vielschichtbauelements überlappen sich die erste und die zweite Innenelektrode wenigstens teilweise.

In einer weiteren Ausführungsform sind die Innenelektroden derart ausgebildet, dass sie sich vorzugsweise nicht gegenseitig überlappen.

In einer weiteren Ausführungsform überlappen sich die erste und/oder die zweite Innenelektrode mit der dritten Innenelektrode wenigstens teilweise.

In einer weiteren Ausführungsform überlappen sich die erste und die zweite Innenelektrode nicht mit der dritten Innenelektrode.

In einer Ausführungsform ist die dritte Innenelektrode zwischen der dielektrischen Schicht und einer der ersten oder zweiten Innenelektroden des elektrischen Vielschichtbauelements angeordnet.

In einer Ausführungsform weist das elektrische Vielschichtbauelement wenigstens ein Deckpaket auf.

In einer Ausführungsform umfasst das Deckpaket wenigstens eine dielektrische Schicht.

In einer Ausführungsform umfassen das wenigstens eine Deckpaket des elektrischen Vielschichtbauelements und/oder die dielektrischen Schichten, die wenigstens eine Öffnung aufweisen, das gleiche Material.

In einer weiteren Ausführungsform ist es auch möglich, dass das wenigstens eine Deckpaket und die dielektrische Schicht unterschiedliche Materialien umfassen.

Erfindungsgemäß wird für die dielektrische Schicht ein Zirkoniumoxid (ZrO) beziehungsweise ein Zirkoniumoxid-Glas-Komposit, ein Aluminiumoxid (AlOₓ) beziehungsweise ein Aluminiumoxid-Glas-Komposit, ein Manganoxid (MnO) beziehungsweise ein Manganoxid-Glas verwendet. Die dielektrischen Schichten können jedoch auch weitere Materialien umfassen.

In einer Ausführungsform des elektrischen Vielschichtbauelements weist der Grundkörper einzelne oder mehrere Durchkontaktierungen, so genannte Vias, auf, über die die erste und/oder die zweite Innenelektrode des elektrischen Vielschichtbauelements mit Außenkontakten des elektrischen Vielschichtbauelements verbunden sind. Die dritte Innenelektrode ist als schwebende Innenelektrode vorzugsweise nicht über Durchkontaktierungen mit Außenkontakten des elektrischen Vielschichtbauelements verbunden.

In einer Ausführungsform sind die Außenkontakte des elektrischen Vielschichtbauelements als Array (Reihenanordnung oder Matrixanordnung) ausgebildet. Hierbei sind besonders Land Grid Array (LGA) oder Ball Grid Array (BGA) geeignet. Bei der Kontaktierung des elektrischen Vielschichtbauelements über Arrays (LGA, BGA) sind wenigstens die erste und zweite Innenelektrode des elektrischen Vielschichtbauelements vorzugsweise über Durchkontaktierungen mit den Außenkontakten des elektrischen Vielschichtbauelements verbunden.

In einer Ausführungsform des elektrischen Vielschichtbauelements ist die dielektrische Schicht, die wenigstens eine Öffnung umfasst, derart ausgebildet, dass sie zusammen mit wenigstens einer benachbarten Varistorschicht, die wenigstens eine erste Innenelektrode umfasst, und einer weiteren überlappenden Innenelektrode eine ESD-Ladungsstrecke (Spark-Gap) bildet.

In einer bevorzugten Ausführungsform weist das elektrische Vielschichtbauelement die Funktion eines Varistors mit einem integrierten Gasentladungs-Schutzelement auf.

Der Varistor weist vorzugsweise eine Kapazität von weniger als 1 pF auf.

Ein wie zuvor beschriebenes elektrisches Vielschichtbauelement weist speziell durch die Anordnung der seriell zu der Varistorkapazität geschalteten Kleinkapazität der dielektrischen Schicht mit einer Öffnung eine Reduktion der Gesamtkapazität des Bauteils auf. Die Klemmspannung des elektrischen Vielschichtbauelements ist durch die dielektrische Schicht gegenüber herkömmlichen Vielschichtbauelementen nur gering erhöht.

Die angegebene Klemmspannung des ESD-Schutzelements ist im Wesentlichen vom Abstand der Innenelektrodenschichten abhängig, sowie von der Ausführung der Öffnung in der dielektrischen Schicht.

Durch ein wie zuvor beschriebenes Design des elektrischen Vielschichtbauelements wird bei einer sehr kleinen Kapazität somit eine geringe Klemmspannung erreicht.

Durch die zusätzliche, eine Öffnung enthaltende Dielektrikumsschicht zwischen wenigstens zwei Innenelektroden des elektrischen Vielschichtbauelements ist die Gesamtkapazität des elektrischen Vielschichtbauelements deutlich reduziert.

Die oben beschriebenen Gegenstände werden anhand der folgenden Figuren und Ausführungsbeispiele näher erläutert.

Die nachfolgend beschriebenen Zeichnungen sind nicht als maßstabsgetreu aufzufassen. Vielmehr können die Darstellungen im Einzelnen vergrößert, verkleinert oder auch verzerrt dargestellt sein. Elemente, die einander gleichen oder die die gleichen Funktionen übernehmen, sind mit den gleichen Bezugszeichen bezeichnet.

Es zeigen:
- Figur 1: eine erste Ausführungsform des elektrischen Vielschichtbauelements,
- Figur 2: eine weitere Ausführungsform des elektrischen Vielschichtbauelements,
- Figur 3: eine weitere Variante des elektrischen Vielschichtbauelements,
- Figur 4: eine weitere Ausführungsform des elektrischen Vielschichtbauelements, bei der die Öffnung in der dielektrischen Schicht zwischen einer dritten Innenelektrode und einem Außenkontakt angeordnet ist,
- Figur 5: einen schematischen Aufbau eines weiteren Ausführungsbeispiels des elektrischen Vielschichtbauelements, bei der die dielektrische Schicht zwischen zwei Varistorschichten angeordnet ist, die jeweils eine Innenelektrode umfassen,
- Figur 6: eine weitere Ausführungsform des elektrischen Vielschichtbauelements, wobei die Außenkontakte als Ball Grid Array ausgeführt sind,
- Figur 7: eine weitere Ausführungsform des elektrischen Vielschichtbauelements, wobei sich die Innenelektroden nicht überlappen.

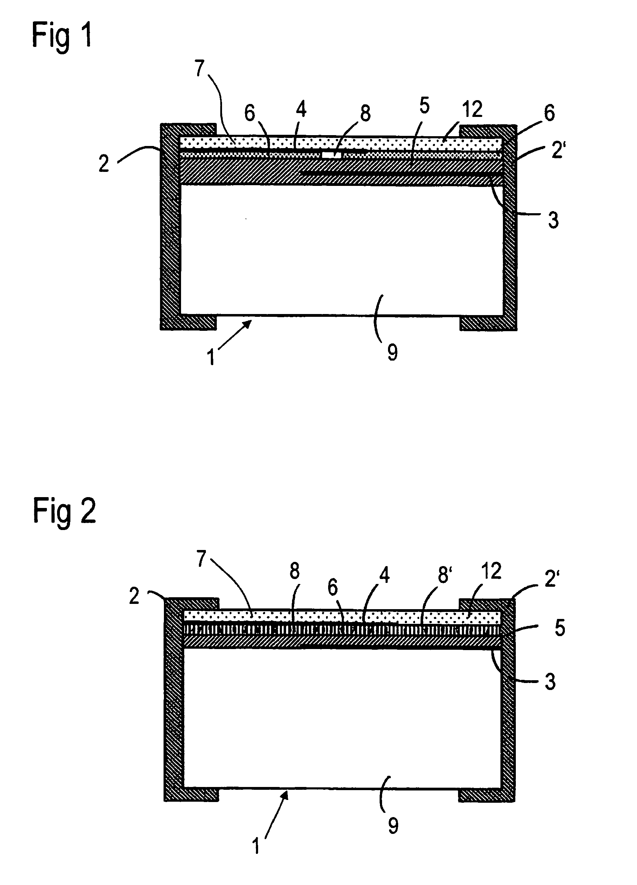

In Figur 1 ist eine erste Ausführungsform eines elektrischen Vielschichtbauelements gezeigt, das einen Grundkörper 1 umfasst. An den Seitenflächen des Grundkörpers 1 sind Außenelektroden 2, 2' angeordnet, die mit den im Inneren des Grundkörpers liegenden Innenelektroden 3, 4 leitend verbunden sind. Der Grundkörper 1 weist eine Varistorschicht 5 auf, die eine erste Innenelektrode 3 umfasst. Die erste Innenelektrode 3 ist größtenteils, d.h. bis auf den Anschluss zur Außenelektrode 2, 2', von der Varistorschicht 5 umschlossen. Das elektrische Vielschichtbauelement weist eine weitere Schicht 7 auf, die in der dargestellten Ausführungsform als Abdeckglas 12 ausgeführt ist.

Zwischen der weiteren Schicht 7 und der Varistorschicht 5 ist eine dielektrische Schicht 6 angeordnet, die eine Öffnung 8 umfasst. An der Grenzfläche zwischen der dielektrischen Schicht 6 und der weiteren Schicht 7 ist eine zweite Innenelektrode 4 angeordnet. Die freien Enden der ersten 3 und zweiten 4 Innenelektrode überlappen sich. Die Öffnung 8 in der dielektrischen Schicht 6 ist vorzugsweise mit einem gasförmigen Medium gefüllt. Der Grundkörper 1 des elektrischen Vielschichtbauelements ist in Dickenrichtung von einem Deckpaket 9 und der weiteren Schicht 7, die als Abdeckglas 12 ausgeführt ist, abgeschlossen. Das Deckpaket 9 umfasst wenigstens eine dielektrische Schicht.

Figur 2 zeigt eine weitere Ausführungsform des elektrischen Vielschichtbauelements. Der Aufbau des elektrischen Vielschichtbauelements nach Figur 2 ist ähnlich zu dem Aufbau des elektrischen Vielschichtbauelements in Figur 1, mit dem Unterschied, dass die dielektrische Schicht 6 des elektrischen Vielschichtbauelements aus einem porösen Material besteht. Die dielektrische Schicht 6 weist mehrere Öffnungen beziehungsweise Durchbrüche 8, 8' auf. Die erste Elektrode 3 ist an der Grenzfläche zwischen der Varistorschicht 5 und dem Deckpaket 9 angeordnet. Die freien Enden der ersten 3 und zweiten 4 Innenelektroden überlappen sich in einem weiten Bereich der Elektrodenfläche.

In einer nicht dargestellten Ausführungsform ist die erste Elektrode 3 jedoch auch wie in der in Figur 1 dargestellten Ausführungsform des elektrischen Vielschichtbauelements von der Varistorschicht 5 größtenteils umfasst.

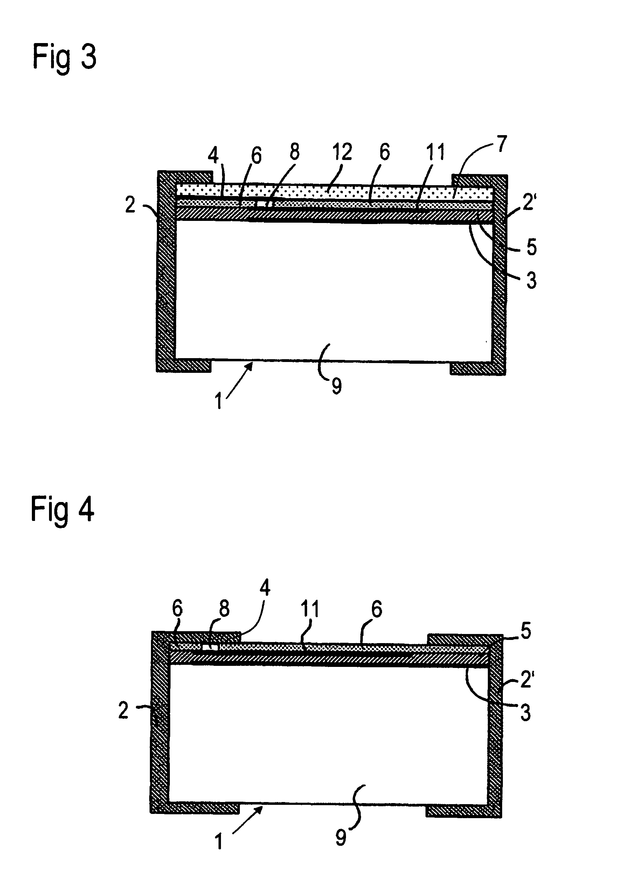

Figur 3 zeigt eine weitere Ausführungsform des elektrischen Vielschichtbauelements. Das elektrische Vielschichtbauelement umfasst einen Grundkörper 1, an dem an den Seitenflächen Außenelektroden 2, 2' angeordnet sind. Der Grundkörper weist eine erste Innenelektrode 3 auf, die an der Grenzfläche zwischen einer Varistorschicht 5 und einem Deckpaket 9 angeordnet ist. Das elektrische Vielschichtbauelement weist eine zweite Innenelektrode 4 auf, die an einer Grenzfläche zu einer weiteren Schicht 7 angeordnet ist. Zwischen der weiteren Schicht 7 und der Varistorschicht 5 ist eine dielektrische Schicht 6 mit einer Öffnung 8 angeordnet. Zwischen der dielektrischen Schicht 6 und der Varistorschicht 5 ist eine weitere, dritte Innenelektrode 11 angeordnet. Die dritte Innenelektrode 11 weist keinen direkten, insbesondere keinen elektrischen Kontakt zu den Außenelektroden 2, 2' des elektrischen Vielschichtbauelements auf. Die dritten Innenelektrode 11 ist also schwebend mit keinem festen elektrischen Potential. Die erste 3 und die zweite 4 Innenelektrode des elektrischen Vielschichtbauelements sind weiter in direktem elektrischen Kontakt zu den Außenelektroden 2, 2' des elektrischen Vielschichtbauelements.

Figur 4 zeigt eine weitere Ausführungsform des elektrischen Vielschichtbauelements. Das elektrische Vielschichtbauelement umfasst einen Grundkörper 1. Die Ausführungsform des elektrischen Vielschichtbauelements in der Figur 4 ist ähnlich zu der Ausführungsform in Figur 3 aufgebaut. Die zweite Elektrode 4 wird in der Ausführungsform nach Figur 4 durch einen Teilbereich der Außenelektrode 2 gebildet. Die dielektrische 6 schließt sich direkt an die Außenelektrode 2 an. Die Öffnung 8 in der dielektrischen Schicht 6 ist zwischen der dritten Elektrode 11 und des Teilbereichs der Außenelektrode 2, die die Funktion der zweiten Innenelektrode 4 umfasst, angeordnet.

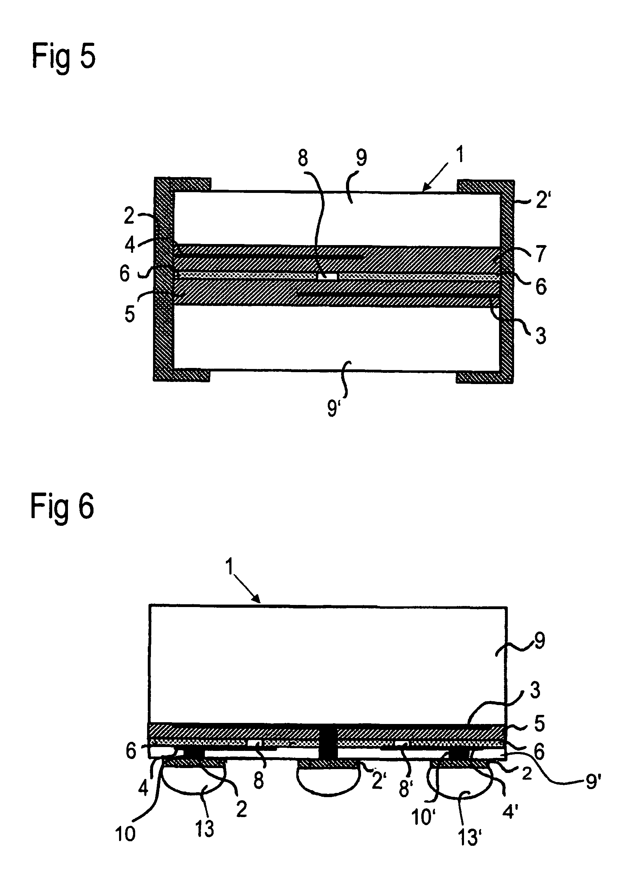

In Figur 5 ist eine weitere Ausführungsform des elektrischen Vielschichtbauelements gezeigt. Das elektrische Vielschichtbauelement weist einen Grundkörper 1 auf, mit an den Seitenflächen angeordneten Außenelektroden 2, 2'. Der Grundkörper 1 umfasst eine Varistorschicht 5, die die erste Innenelektrode 3 größtenteils umschließt. Über der Varistorschicht 5 ist eine dielektrische Schicht 6 angeordnet, die eine Öffnung 8 aufweist. An die dielektrische Schicht 6 schließt sich eine weitere Schicht 7 an, die eine zweite Elektrode 4 größtenteils umschließt. In der dargestellten Ausführungsform ist die weitere Schicht 7 als Varistorschicht ausgeführt. In Dickenrichtung ist das elektrische Vielschichtbauelements von Deckpaketen 9, 9' abgeschlossen. Die Deckpakete 9, 9' umfassen jeweils wenigstens eine dielektrische Schicht. Die Innenelektroden 3, 4 überlappen einander und bilden mit der Öffnung 8 zur dielektrischen Schicht 6 ein ESD-Schutzelement.

Figur 6 zeigt eine weitere Ausführungsform des elektrischen Vielschichtbauelements. Der Grundkörper 1 des elektrischen Vielschichtbauelements umfasst eine Varistorschicht 5, auf der eine erste Innenelektrode 3 angeordnet ist. In Dickenrichtung unter der Varistorschicht 5 ist eine dielektrische Schicht 6 angeordnet, die in der dargestellten Ausführungsform zwei Öffnungen 8, 8' aufweist. Der Grundkörper 1 des elektrischen Vielschichtbauelements ist in Dickenrichtung von Deckpaketen 9, 9' abgeschlossen. Die Deckpakete 9, 9' umfassen wenigstens eine dielektrische Schicht.

Das elektrische Vielschichtbauelement weist zwei zweite Elektroden 4, 4' auf, die an der Grenzfläche zwischen der dielektrischen Schicht 6 und dem zweiten Deckpaket 9' angeordnet sind. Die Kontaktierung der ersten Innelektroden 3 und der zwei zweiten Innenelektroden 4, 4' erfolgt über Durchkontaktierungen (Vias) 10, 10'. Die Außenkontakte 2, 2' des elektrischen Vielschichtbauelements in der dargestellten Ausführungsform sind als Ball Grid Arrays (BGA) ausgeführt. An den Außenkontakten 2, 2' sind so genannte Bumps 13, 13' angeordnet.

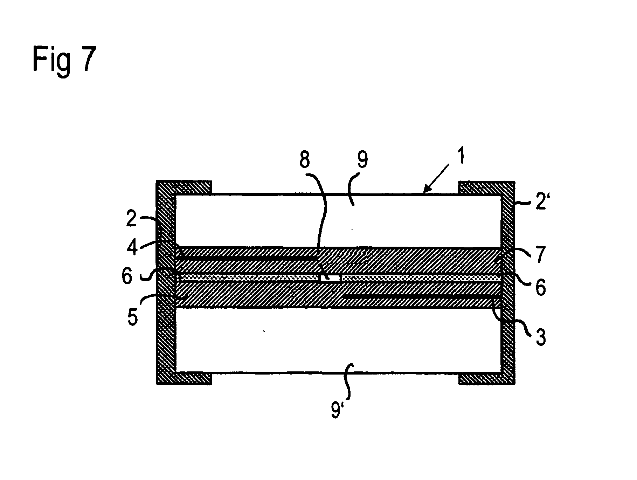

In Figur 7 ist eine weitere Ausführungsform des elektrischen Vielschichtbauelements gezeigt. Die Ausführungsform des elektrischen Vielschichtbauelements in der Figur 7 ist ähnlich zu der Ausführungsform in Figur 5 aufgebaut. Die erste 3 und die zweite 4 Innenelektrode des elektrischen Vielschichtbauelements überlappen sich in der dargestellten Ausführungsform jedoch nicht. Die erste 3 und die zweite 4 Innenelektrode reichen bis an die Öffnung 8 in der dielektrischen Schicht heran, wobei sich die erste 3 und die zweite 4 Innenelektrode in Dickenrichtung des elektrischen Vielschichtbauelements nicht gegenseitig überlappen.

Obwohl in den Ausführungsbeispielen nur eine beschränkte Anzahl möglicher Weiterbildungen beschrieben werden konnte, ist die Erfindung nicht auf diese beschränkt. Es ist prinzipiell möglich, dass das elektrische Vielschichtbauelement mehrere in Reihe oder parallel geschaltete ESD-Schutzeinrichtungen umfasst, die durch eine dielektrische Schicht mit einer oder mehreren Öffnungen und wenigstens einer anliegenden Varistorschicht gebildet sind. Die Öffnungen in der dielektrischen Schicht können als Durchbruch, Hohlraum, Vertiefung oder anderweitig ausgeführt sein.

Die Beschreibung der hier angegebenen Gegenstände ist nicht auf die einzelnen speziellen Ausführungsformen beschränkt. Vielmehr können die Merkmale der einzelnen Ausführungsformen, soweit technisch sinnvoll, beliebig miteinander kombiniert werden.

### Bezugszeichenliste

- 1: Grundkörper
- 2, 2': Außenelektrode
- 3: erste Innenelektrode
- 4: zweite Innenelektrode
- 5: Varistorschicht
- 6: dielektrische Schicht
- 7: weitere Schicht
- 8, 8': Öffnung
- 9, 9': Deckpaket
- 10, 10': Durchkontaktierung (Via)
- 11: dritte Innenelektrode
- 12: Abdeckglas
- 13, 13': Bump

## Patentansprüche

1. Elektrisches Vielschichtbauelement, aufweisend
- einen Grundkörper (1) mit zwei Außenelektroden (2, 2'),
- eine erste (3) und eine zweite (4) Innenelektrode, die elektrisch leitend mit je einer Außenelektrode (2, 2') verbunden sind, und
- wenigstens eine keramische Varistorschicht (5), die die erste Innenelektrode (3) umfasst,
**dadurch gekennzeichnet, dass**
- wenigstens eine zusätzliche, wenigstens eine Öffnung (8) enthaltende dielektrische Schicht (6) zwischen der Varistorschicht (5) und der zweiten Innenelektrode (4) angeordnet ist, wobei
- die dielektrische Schicht (6) an die Varistorschicht (5) angrenzt und
- die dielektrische Schicht (6) ZrO2, ein ZrO2-Glas-Komposit, AlOₓ, ein AlOₓ-Glas, MgO oder ein MgO-Glas umfasst.

2. Elektrisches Vielschichtbauelement nach Anspruch 1, bei dem
die Öffnung (8) in der dielektrischen Schicht (6) an die Varistorschicht (5) angrenzt.

3. Elektrisches Vielschichtbauelement nach Anspruch 1 oder 2, bei dem
die Öffnung (8) mit einem gasförmigen Medium gefüllt ist.

4. Elektrisches Vielschichtbauelement nach einem der Ansprüche 1 bis 3, bei dem
die dielektrische Schicht (6) ein poröses Material umfasst.

5. Elektrisches Vielschichtbauelement nach einem der Ansprüche 1 bis 4, bei dem
zwischen der dielektrischen Schicht (6) und der zweiten Innenelektrode (4) eine weitere Schicht (7) angeordnet ist, die die zweite Innenelektrode (4) umfasst und als Varistorschicht ausgeführt ist.

6. Elektrisches Vielschichtbauelement nach einem der Ansprüche 1 bis 5, bei dem
die zweite Innenelektrode (4) durch Teilbereiche einer Außenelektrode (2, 2') gebildet ist.

7. Elektrisches Vielschichtbauelement nach einem der Ansprüche 1 bis 6, das eine dritte Innenelektrode (11) aufweist, die als schwebende Innenelektrode ausgeführt ist.

8. Elektrisches Vielschichtbauelement nach Anspruch 7, bei dem
die dritte Innenelektrode (11) zwischen der dielektrischen Schicht (6) und der ersten Innenelektrode (3) angeordnet ist.

9. Elektrisches Vielschichtbauelement nach Anspruch 7, bei dem
die dritte Innenelektrode (11) zwischen der dielektrischen Schicht (6) und der zweiten Innenelektrode (4) angeordnet ist.

10. Elektrisches Vielschichtbauelement nach einem der Ansprüche 1 bis 9, bei dem
der Grundkörper (1) wenigstens ein Deckpaket (9, 9') aufweist, das wenigstens eine dielektrische Schicht umfasst.

11. Elektrisches Vielschichtbauelement nach einem der Ansprüche 1 bis 10, bei dem
die erste Innenelektrode (3) im Abstand zu der dielektrischen Schicht (6) angeordnet ist.

12. Elektrisches Vielschichtbauelement nach einem der Ansprüche 1 bis 11, bei dem
die erste Innenelektrode (3) und die zweite Innenelektrode (4) über Durchkontaktierungen (10) mit den Außenkontakten (2, 2') verbunden sind.

13. Elektrisches Vielschichtbauelement nach einem der Ansprüche 1 bis 12, bei dem
die Außenkontakte (2, 2') als Land-Grid-Array (LGA) oder als Ball-Grid-Array (BGA) ausgebildet sind.

14. Elektrisches Vielschichtbauelement nach einem der Ansprüche 1 bis 13, bei dem
die dielektrische Schicht (6) zusammen mit wenigstens einer benachbarten Varistorschicht (5) und zwei überlappenden Innenelektroden (2, 3, 11) eine ESD-Entladungsstrecke bildet.

15. Elektrisches Vielschichtbauelement nach einem der Ansprüche 1 bis 14, das die Funktion eines Varistors mit einem integrierten Gasentlade-Schutzelement aufweist.

## Claims

1. Electrical multilayer component, comprising
- a base body (1) with two external electrodes (2, 2'),
- a first (3) and a second (4) internal electrode, which are electrically conductively connected to a respective external electrode (2, 2'), and
- at least one ceramic varistor layer (5), which encompasses the first internal electrode (3),
**characterized in that**
- at least one additional dielectric layer (6) containing at least one opening (8) is arranged between the varistor layer (5) and the second internal electrode (4), wherein
- the dielectric layer (6) adjoins the varistor layer (5), and
- the dielectric layer (6) comprises ZrO₂ a ZrO₂-glass composite, AlOₓ, an AlOₓ glass, MgO or an MgO glass.

2. Electrical multilayer component according to claim 1, wherein
the opening (8) in the dielectric layer (6) adjoins the varistor layer (5).

3. Electrical multilayer component according to claim 1 or 2, wherein
the opening (8) is filled with a gaseous medium.

4. Electrical multilayer component according to any of claims 1 to 3, wherein
the dielectric layer (6) comprises a porous material.

5. Electrical multilayer component according to any of claims 1 to 4, wherein
a further layer (7) is arranged between the dielectric layer (6) and the second internal electrode (4), said further layer encompassing the second internal electrode (4) and being embodied as a varistor layer.

6. Electrical multilayer component according to any of claims 1 to 5, wherein
the second internal electrode (4) is formed by partial regions of an external electrode (2, 2').

7. Electrical multilayer component according to any of claims 1 to 6, which comprises a third internal electrode (11), which is embodied as a floating internal electrode.

8. Electrical multilayer component according to claim 7,
wherein
the third internal electrode (11) is arranged between the dielectric layer (6) and the first internal electrode (3).

9. Electrical multilayer component according to claim 7,
wherein
the third internal electrode (11) is arranged between the dielectric layer (6) and the second internal electrode (4).

10. Electrical multilayer component according to any of claims 1 to 9, wherein
the base body (1) has at least one covering assembly (9, 9') encompassing at least one dielectric layer.

11. Electrical multilayer component according to any of claims 1 to 10, wherein
the first internal electrode (3) is arranged at a distance from the dielectric layer (6).

12. Electrical multilayer component according to any of claims 1 to 11, wherein
the first internal electrode (3) and the second internal electrode (4) are connected to the external contacts (2, 2') via plated-through holes (10).

13. Electrical multilayer component according to any of claims 1 to 12, wherein
the external contacts (2, 2') are embodied as a land grid array (LGA) or as a ball grid array (BGA).

14. Electrical multilayer component according to any of claims 1 to 13, wherein
the dielectric layer (6) together with at least one adjacent varistor layer (5) and two overlapping internal electrodes (2, 3, 11) forms an ESD discharge section.

15. Electrical multilayer component according to any of claims 1 to 14, which has the function of a varistor with an integrated gas discharge protection element.

## Revendications

1. Composant multicouche électrique présentant
- un corps de base (1) muni de deux électrodes extérieures (2, 2'),
- une première (3) et une deuxième (4) électrode intérieure qui sont reliées électriquement respectivement avec une électrode extérieure (2, 2'), et
- au moins une couche de varistance en céramique (5) qui entoure la première électrode intérieure (3), **caractérisé en ce que**
- au moins une couche diélectrique (6) supplémentaire, contenant au moins une ouverture (8), est disposée entre la couche de varistance (5) et la deuxième électrode intérieure (4),
- la couche diélectrique (6) étant contiguë à la couche de varistance (5) et
- la couche diélectrique (6) comprenant du ZrO₂, un composite ZrO₂-verre, de l'AlOₓ, un verre d'AlOₓ, du MgO ou un verre de MgO.

2. Composant multicouche électrique selon la revendication 1, avec lequel l'ouverture (8) dans la couche diélectrique (6) est contiguë à la couche de varistance (5).

3. Composant multicouche électrique selon la revendication 1 ou 2, avec lequel l'ouverture (8) est remplie avec un fluide gazeux.

4. Composant multicouche électrique selon l'une des revendications 1 à 3, avec lequel la couche diélectrique (6) comprend un matériau poreux.

5. Composant multicouche électrique selon l'une des revendications 1 à 4, avec lequel une couche supplémentaire (7) est disposée entre la couche diélectrique (6) et la deuxième électrode intérieure (4), laquelle comprend la deuxième électrode intérieure (4) et est réalisée sous la forme d'une couche de varistance.

6. Composant multicouche électrique selon l'une des revendications 1 à 5, avec lequel la deuxième électrode intérieure (4) est formée par des zones partielles d'une électrode extérieure (2, 2').

7. Composant multicouche électrique selon l'une des revendications 1 à 6, lequel présente une troisième électrode intérieure (11) qui est réalisés sous la forme d'une électrode intérieure flottante.

8. Composant multicouche électrique selon la revendication 7, avec lequel la troisième électrode intérieure (11) est disposée entre la couche diélectrique (6) et la première électrode intérieure (3).

9. Composant multicouche électrique selon la revendication 7, avec lequel la troisième électrode intérieure (11) est disposée entre la couche diélectrique (6) et la deuxième électrode intérieure (4).

10. Composant multicouche électrique selon l'une des revendications 1 à 9, avec lequel le corps de base (1) présente au moins un bloc de recouvrement (9, 9') qui comprend au moins une couche diélectrique.

11. Composant multicouche électrique selon l'une des revendications 1 à 10, avec lequel la première électrode intérieure (3) est disposée à distance de la couche diélectrique (6).

12. Composant multicouche électrique selon l'une des revendications 1 à 11, avec lequel la première électrode intérieure (3) et la deuxième électrode intérieure (4) sont reliées avec les contacts extérieurs (2, 2') par le biais de contacts traversants (10).

13. Composant multicouche électrique selon l'une des revendications 1 à 12, avec lequel les contacts extérieurs (2, 2') sont réalisés sous la forme d'une matrice de pastilles (LGA) ou d'une matrice de billes (BGA) .

14. Composant multicouche électrique selon l'une des revendications 1 à 13, avec lequel la couche diélectrique (6), conjointement avec au moins une couche de varistance (5) voisine et deux électrodes intérieures (2, 3, 11) qui se chevauchent, forme un trajet de décharge d'ESD.

15. Composant multicouche électrique selon l'une des revendications 1 à 14, lequel présente la fonction d'une varistance munie d'un élément de protection à décharge gazeuse intégré.
